# EUROPÄISCHE PATENTSCHRIFT

(11) **EP 1 350 305 B1**
(45) Veröffentlichungstag und Bekanntmachung des Hinweises auf die Patenterteilung: **04.08.2004**
(21) Anmeldenummer: 01271964.7
(22) Anmeldetag: 13.12.2001
(51) Int. Cl.: H02M 3/155

(54) **TIEFSETZSTELLER**
STEP-DOWN CONVERTER
REDUCTEUR DE VOLTAGE

(30) Priorität: 27.12.2000 DE 10065421
(43) Veröffentlichungstag der Anmeldung: 08.10.2003
(73) Patentinhaber: SIEMENS AKTIENGESELLSCHAFT, 80333 München (DE)
(72) Erfinder: FORMANEK, Karl, A-1110 Wien (AT)
(86) Internationale Anmeldenummer: PCT/DE2001/004701
(87) Internationale Veröffentlichungsnummer: WO 2002/052705

(56) Entgegenhaltungen:
- PATENT ABSTRACTS OF JAPAN vol. 1998, no. 05, 30. April 1998 (1998-04-30) & JP 10 014127 A (SGS THOMSON MICROELETTRONICA SPA), 16. Januar 1998 (1998-01-16)
- PATENT ABSTRACTS OF JAPAN vol. 1998, no. 13, 30. November 1998 (1998-11-30) & JP 10 210734 A (TOYOTA AUTOM LOOM WORKS LTD), 7. August 1998 (1998-08-07)
- PATENT ABSTRACTS OF JAPAN vol. 014, no. 248 (E-0933), 28. Mai 1990 (1990-05-28) & JP 02 070261 A (MITSUBISHI ELECTRIC CORP), 9. März 1990 (1990-03-09)
- PATENT ABSTRACTS OF JAPAN vol. 1996, no. 10, 31. Oktober 1996 (1996-10-31) & JP 08 149804 A (CANON INC), 7. Juni 1996 (1996-06-07)

## Beschreibung

Die Erfindung bezieht sich auf einen Tiefsetzsteller zur Umwandlung einer Eingangsgleichspannung in eine Ausgangsgleichspannung, bei welchem in einem Längszweig die Serienschaltung eines gesteuerten Schalters und einer Induktivität in einem Querzweig, zwischen Schalter und Induktivität eine Freilaufdiode und ausgangsseitig ein Glättungskondensator vorgesehen sind und der Schalter zum periodischen Öffnen und Schließen von einer Ansteuerschaltung in Abhängigkeit von dem Längsstrom angesteuert ist. Ein Tiefsetzsteller mit den Merkmalen des Oberbegriffs des Anspruchs 1 ist aus der JP10014127 bekannt geworden.

Tiefsetzsteller dieser Art sind in einer Vielzahl von Variationen bekannt geworden. Sie werden beispielsweise zum Laden von Akkumulatoren, zum Speisen von Leuchtdioden oder zum Speisen primärer Ansteuerungsschaltungen von Schaltnetzteilen verwendet.

Aus der WO 99/13559 ist ein DC/DC-Tiefsetzsteller mit einem Schaltregler bekannt. Der Schaltregler weist Schaltmittel zum Schalten der ungeregelten DC-Eingangsspannung, einen Stromfühlerverstärker zur Ansteuerung der Schaltmittel, einen Hysteresegenerator zur Ansteuerung des Stromfühlerverstärkers sowie eine Ausgangsschaltung zur Erzeugung eines geregelten DC-Signals für die Ausgangsstufe auf.

Will man Tiefsetzsteller der gegenständlichen Art ohne Zwischenschaltung eines Transformators an einem üblichen Haushaltsnetz mit 230 Volt Wechselspannung - bzw. nach Gleichrichtung ca. 325 Volt - verwenden, so ergibt sich das Problem, dass nicht nur der gesteuerte Schalter die entsprechende Spannungsfestigkeit aufweisen muss, sondern auch die zugehörige Ansteuerschaltung. Da nach dem Einschalten außer der genannten hohen Eingangsspannung keine andere Spannungsquelle vorhanden ist, muss auf die hohe Eingangsspannung zugegriffen werden. Um einen der üblicherweise verwendeten selbst sperrenden Feldeffekttransistoren zu sperren, muss die Gate Spannung wieder abgeschaltet werden, sodass hier die gesamte Eingangsspannung anliegt. Überdies muss eine Schutzschaltung für das Gate gegen übermäßig hohe Spannungen vorgesehen werden, was den Bauteile-Aufwand erhöht.

Eine andere Variante besteht darin, die Gate Spannung nicht abzuschalten und das Gate kurz zu schließen. In diesem Fall bestehen zwar für das hierfür verwendete Schaltelement keine besonderen Spannungsanforderungen, doch muss die Spannungsversorgung für das Gate immer aus der hohen Eingangsspannung erzeugt werden, wozu ein Vorwiderstand verwendet wird, der wiederum zu einer unerwünscht hohen Verlustleistung fuhrt. Ein solcher Vorwiderstand muss für die hohe Eingangsspannung und für eine höhere Leistung dimensioniert werden, und es ergibt sich auch als Folge, dass bei einem leistungsoptimierten Vorwiderstand der an sich erwünschte weite Eingangsspannungsbereich eines solchen Tiefsetzstellers entfällt.

Eine Aufgabe der Erfindung liegt darin, einen Tiefsetzsteller zu schaffen, der bei einem hohen Eingangsspannungsbereich mit geringem Aufwand und mit möglichst geringer Verlustleistung realisiert werden kann.

Diese Aufgabe wird mit einem Tiefsetzsteller der eingangs genannten Art erfindungsgemäß dadurch gelöst, dass der gesteuerte Schalter als selbstleitender Schalttransistor ausgebildet ist, welcher von einem Steuertransistor angesteuert ist, der ab Erreichen eines durch den Stromfühler erfassten Maximalwert des Längsstrom dem Schalttransistor eine in dem Längszweig durch eine Zenerdiode erzeugte Sperrspannung zuführt.

Durch die Verwendung eines selbst leitenden Schalttransistors kann die Ansteuerschaltung bzw. das für das Ansteuern erforderliche Schaltelement mit wesentlich geringerer Spannungsfestigkeit und daher kostengünstiger ausgeführt werden. Vorwiderstände für die Versorgung der Ansteuerung sind nicht erforderlich, sodass ein diesbezüglicher Leistungsaufwand entfällt.

Es ist von Vorteil, wenn der Zenerdiode ein Kondensator parallelgeschaltet ist, da hierdurch eine Sperrspannung für den Feldeffekttransistor aufrecht erhalten wird, auch wenn kein Strom mehr fließt.

Weiters ist es zweckmäßig, wenn der Schalttransistor ein Depletion-FET ist, wobei Gate und Drain über einen Gate-Drain-Widerstand miteinander verbunden sind.

Eine kostengünstige und einfache Ausführungsform zeichnet sich dadurch aus, dass der Stromfühler in dem Längszweig als Fühlwiderstand ausgebildet ist, wobei der an diesem auftretende Spannungsabfall der Basis-Emitterstrecke des Steuertransistors zuführbar ist, der mit seinem Kollektor zu dem Gate des Schalttransistors geführt ist. Zweckmäßigerweise liegt dabei der Fühlwiederstand in dem Längszweig zwischen der Zenerdiode und der Induktivität.

Zur Verbesserung des Schaltverhaltens ist es vorteilhaft, wenn ein Entladungstransistor vorgesehen ist, dessen Kollektor-Emitterstrecke in Serie mit einem Entladewiderstand die Gate-Source Strecke des Schalttransistors überbrückt, wobei der Basis-Emitter-Strecke des Entladungstransistors der Spannungsabfall an einem weiteren Fühlwiderstand im Längszweig zuführbar ist.

Um eine Beschädigung des Glättungskondensators bei Fortfall der Last zu verhindern, ist es angebracht, wenn die Ausgangsspannung an dem Glattungskondensator durch einen Spannungsbegrenzer, wie eine Zenerdiode, begrenzt ist.

Die Erfindung samt weiteren Vorteilen ist im Folgenden unter Bezugnahme auf die Zeichnung näher erläutert. In dieser zeigen:
- Fig. 1: die Prinzipschaltung eines Tiefsetzstellers auch nach der Erfindung,
- Fig. 2: ein vereinfachtes Schaltbild eines Tiefsetzstellers nach der Erfindung, und
- Fig. 3: eine Schaltung entsprechend Fig. 2, jedoch mit einem Entladunqstransistor und einer Spannungsbegrenzung am Ausgang.

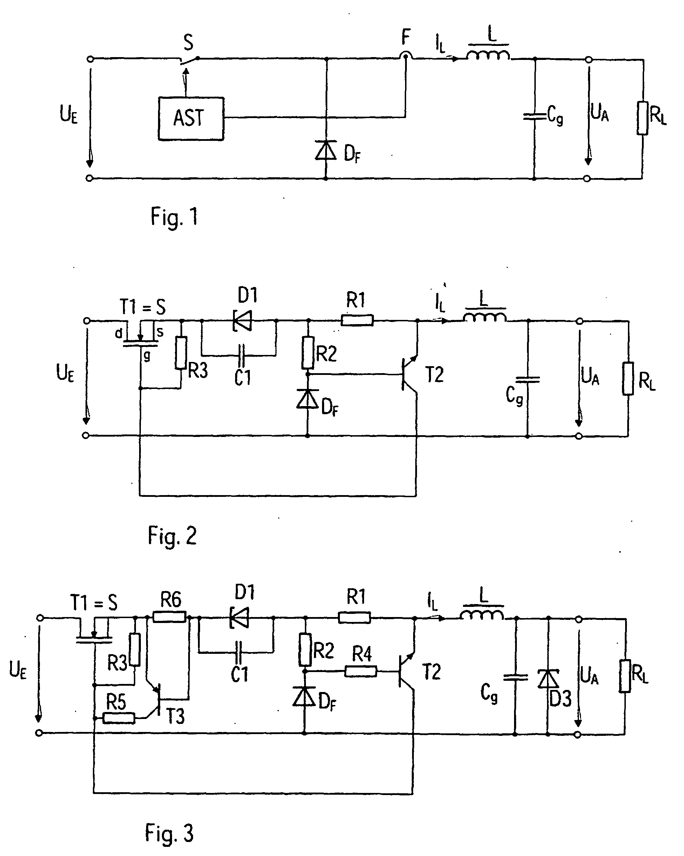

Ein Tiefsetzsteller weist gemäß Fig. 1 in einem Längszweig einen gesteuerten Schalter S auf, der über eine Ansteuerschaltung AST in Abhängigkeit eines durch einen Fühler F gemessenen Stromes in dem Längszweig geöffnet bzw. geschlossen wird. In dem Längszweig liegt weiters nach dem gesteuerten Schalter eine Induktivität L, über die ein Strom I_{L} zu einem Lastwiderstand RL bzw. einem dazu parallel liegenden Glättungskondensator CG fließen kann. Um die Schaltung funktionsfähig zu gestalten, ist noch eine Freilaufdiode DF vorzusehen, die in der gezeigten Weise in dem Querzweig zwischen dem gesteuerten Schalter S und der Induktivität L liegt, sodass die in der Induktivität L gespeicherte Energie an den Verbraucher abgegeben werden kann. Die Funktionsweise einer solchen Schaltung, welche eine Eingangsgleichspannung UE in der Größe von z.B. 50 - 350 Volt in eine Ausgangsgleichspannung UA von z.B. 12 Volt umsetzt, darf als bekannt vorausgesetzt werden.

Fig. 2 zeigt nun eine Schaltung nach der Erfindung, bei welcher der gesteuerte Schalter als FET-Transistor vom Depletion- oder Verarmungstyp ausgebildet ist. Ein solcher FET-Transistor ist selbstleitend. Source und Gate des Transistors T1 sind über eine Source-Gate-Widerstand R3 miteinander verbunden. In dem Längszweig folgt auf den Transistor T1 eine Zenderdiode D1 mit einer Zenerspannung im Bereich von einigen Volt, z.B. 6 Volt, wobei die Zenerdiode D1 durch einen Kondensator C1 überbrückt ist. Weiters folgt in dem Längszweig ein Fühlwiderstand R1 und darauf die Induktivität L, die zu dem Ausgang mit dem Glättungskondensator CG und der Last, hier als Widerstand RL eingezeichnet, führt. Zwischen dem Fühlwiderstand R1 und der Zenerdiode D1 in dem Längszweig führt ein Widerstand R2 zu der Freilaufdiode DF, wobei der Spannungsabfall an dem Widerstand R1, entsprechend dem Strom I_{L} durch einen Steuertransistor T2 erfasst wird, d.h. seiner Basis-Emitter-Strecke zugeführt wird. Der Emitter des Steuertransistors D2 liegt in dem Längszweig zwischen dem Fuhlwiderstand R1 und der Induktivität L, wogegen sein Kollektor zu dem Gate des FET-Transistors T1 geführt ist.

Die Funktionsweise der Schaltung wird im Folgenden kurz erlautert: Sobald eine Eingangsspannung UE auftritt, fließt ein Strom über den FET-Transistor T1, zunächst über C1, über R1 und die Induktivität L und RL, wobei im Wesentlichen ein linearer Stromanstieg erfolgt, bis der Spannungsabfall entsprechend dem größer gewordenen Strom IL an R1 so groß ist, dass der Transistor D2 durchsteuert und der wesentliche Spannungsabfall an der Zenerdiode D1 als Sperrspannung an das Gate des FET-Transistors T1 gelangt, sodass dieser sperrt. Nun erfolgt der Energieabbau aus der Induktivität L, wobei ein Strom über den Widerstand R1, den Widerstand R2 und die Freilaufdiode DF fließt. In diesem Fall bleibt der Steuertransistor T2 leitend, und es bleibt der FET-Transistor T1 gesperrt. Mit sinkendem Strom in dieser Entladungsphase der Induktivität L sinkt auf der Basisstrom durch den Steuertransistor T2, sodass schließlich wiederum der FET-Transistor T1 leitend wird. Zu erwähnen ist, dass der Kondensator C1, der parallel zur Zenerdiode D1 im Längszweig liegt, während der Sperrphase des FET-Transistors sehr wesentlich ist, da er eine Sperrspannung aufrecht erhält, auch wenn kein Strom mehr fließt.

In Fig. 3 ist gezeigt, wie man das Abschaltverhalten des Feldeffekttransistors durch einen Entladetransistor T3 verbessern kann. In dem Längszweig liegt gemäß Fig. 3 zwischen dem FET-Transistor T1 und der Zenerdiode D1 ein weiterer Widerstand R6, wobei die an diesem abfallende Spannung dem Emitter bzw. der Basis des Entladungstransistors T3 zugeführt sind, wogegen der Kollektor dieses Transistors über einen Widerstand R5 zu dem Gate des FET-Transistors T1 geführt ist. Der Widerstandswert des Kollektorwiderstandes R5 betragt in der Praxis beispielsweise etwa 1/10 des Widerstandswertes des Gate-Source-Widerstandes R3. Wenn der FET-Transistor T1 wieder zu leiten beginnt, so entsteht eine Spannung an dem Widerstand R6, und es fließt ein Strom in die Basis des Entladungstransistors T3, der nun durchsteuert, sodass die Gate-Ladung über den vergleichsweise niederohmigen Widerstand R5 rasch abgeführt werden kann.

Die Erfindung schafft eine energiesparende und kostengünstige Stromversorgung für Verbraucher insbesondere kleiner Leistung, die direkt aus dem Netz, z.B. dem 230 Volt Haushaltsnetz versorgt werden sollen, wobei ein Vorwiderstand mit entsprechender Wärmeentwicklung und unnötigem Energieverbrauch ebenso entfällt, wie beispielsweise ein Kleintransformator. Es ist bemerkenswert, dass die Schaltung einerseits kurzschlussfest ist, wobei der maximale Strom, d.h. "Ladestrom" der Induktivität L vor allem durch den Widerstand R1 bestimmt wird. Hingegen bestimmt der Wert des Widerstandes R2, zusammen mit dem Wert des Widerstandes R1, den Entladestrom der Induktivität L. Durch entsprechende Dimensionierung der Widerstände R1 und R2 kann eine Leistungsanpassung an den jeweiligen Verbraucher durchgeführt werden. Da der Laststrom über weite Bereiche annähernd konstant ist, ist die aufgenommene bzw. abgegebene Leistung abhängig von der Ausgangsspannung UA, die bei der Ausführung nach Fig. 3 durch eine Zenerdiode D3 begrenzt wird, z.B. auf 12 Volt, da ohne eine solche Begrenzung bei Fortfall der Last (RL = ∞) die Spannung an dem Glättungskondensator CG im Prinzip den Wert der Eingangsspannung UE annehmen würde.

Wenngleich die Schaltung nach Fig. 3 besonders empfehlenswert ist, soll bemerkt werden, dass der Entladetransistor T3 bei kleiner Leistung bzw. geringem Strom des Tiefsetzstellers nicht erforderlich ist, was zu der Schaltung nach Fig. 2 führt, bei welcher natürlich gleichfalls eine Zenerdiode D3 zur Begrenzung der Ausgangsspannung vorhanden sein könnte.

## Patentansprüche

1. Tiefsetzsteller zur Umwandlung einer Eingangsgleichspannung (U_{E}) in eine Ausgangsgleichspannung (U_{A}), bei welchem in einem Längszweig die Serienschaltung eines gesteuerten Schalters (S, T1), im Stromfühler (F, R₁) und einer Induktivität (L), in einem Querzweig, zwischen Schalter und Induktivität eine Freilaufdiode (D_{F}) und ausgangsseitig ein Glättungskondensator (C_{g}) vorgesehen sind und der Schalter zum periodischen Öffnen und Schließen von einem Steuertransistor (T2) einer Ansteuerschaltung (AST) in Abhängigkeit von dem Längsstrom (I_{L}) angesteuert ist,
**dadurch gekennzeichnet,**
**dass** der gesteuerte Schalter als selbstleitender Schalttransistor (T1) ausgebildet ist, welchem ab Erreichen eines durch den Stromfühler (F, R₁) erfassten Maximalwert des Längsstroms (I) eine in dem Längszweig durch eine Zenerdiode (D1) mit einem dazu parallel geschalteten Kondensator (C1) erzeugte Sperrspannung zugefuhrt wird.

2. Tiefsetzsteller nach Anspruch 1,
**dadurch gekennzeichnet, dass** der Schalttransistor (T1) ein Depletion-FET ist, wobei Gate und Source über einen Gate-Source Widerstand (R3) miteinander verbunden sind.

3. Tiefsetzsteller nach Anspruch 2,
**dadurch gekennzeichnet, dass** der Stromfühler in dem Längszweig als Fühlwiderstand (R1) ausgebildet ist, wobei der an diesem auftretende Spannungsabfall der Basis-Emitterstrecke des Steuertransistors (T2) zuführbar ist, der mit seinem Kollektor zu dem Gate des Schalttransistors (T1) geführt ist.

4. Tiefsetzsteller nach Anspruch 3,
**dadurch gekennzeichnet, dass** der Fühlwiderstand (R1) in dem Längszweig zwischen der Zenerdiode (D1) und der Induktivität (L) liegt.

5. Tiefsetzsteller nach einem der Ansprüche 2 bis 4,
**dadurch gekennzeichnet, dass** ein Entladungstransistor (T3) vorgesehen ist, dessen Kollektor-Emitterstrecke in Serie mit einem Entladewiderstand (R5) die Gate-Source Strecke des Schalttransistors (T1) überbrückt, wobei der Basis-Emitter-Strecke des Entladungstransistors der Spannungsabfall an einem weiteren Fühlwiderstand (R6) im Längszweig zuführbar ist.

6. Tiefsetzsteller nach einem der Ansprüche 1 bis 5,
**dadurch gekennzeichnet, dass** die Ausgangsspannung an dem Glättungskondensator (C_{g}) durch eine Zenerdiode (D3) begrenzt ist.

## Claims

1. A step-down converter for converting a DC input voltage (U_{E}) into a DC output voltage (U_{A}), wherein a controlled switch (S, T1), a current sensor (F, R₁) and an inductance (L) are series-connected in a series arm of the step-down converter, a freewheeling diode (D_{F}) is disposed in a shunt arm between the controlled switch and the inductance, and a smoothing capacitor (C_{g}) is provided on the output side of the step-down converter, and wherein the controlled switch is controlled by a control circuit (AST) as a function of the current (I_{L}) flowing through the series arm so that the controlled switch periodically opens and closes,
**characterized in that**
the controlled switch is embodied as a self-conducting switching transistor (T1) to which a blocking voltage generated in the series arm by a Zener diode (D1) with a parallel-connected capacitor (C1) is supplied from the point at which the current sensor (F, R₁) senses that the current (I) flowing through the series arm has reached a maximum value.

2. The step-down converter as claimed in claim 1,
**characterized in that** the switching transistor (T1) is a depletion FET, wherein gate and source are connected to each other via a gate-source resistor (R3).

3. The step-down converter as claimed in claim 2,
**characterized in that** the current sensor in the series arm is embodied as a sensor resistor (R1), wherein the voltage drop occurring at said sensor resistor can be supplied to the base-emitter path of the control transistor (T2) and wherein the collector of the control transistor (T2) is led to the gate of the switching transistor (T1).

4. The step-down converter as claimed in claim 3,
**characterized in that** the sensor resistor (R1) is located in the series arm between the Zener diode (D1) and the inductance (L).

5. The step-down converter as claimed in one of claims 2 to 4,
**characterized in that** a discharge transistor (T3) is provided whose collector-emitter path, connected in series with a discharge resistor (R5), bridges the gate-source path of the switching transistor (T1), whereby the voltage drop at a further sensor resistor (R6) in the series arm can be supplied to the base-emitter path of the discharge transistor.

6. The step-down converter as claimed in one of claims 1 to 5,
**characterized in that** the output voltage at the smoothing capacitor (C_{g}) is limited by a Zener diode (D3).

## Revendications

1. Dévolteur transformant une tension (U_{E}) continue d'entrée en une tension (U_{A}) continue de sortie, dans lequel il est prévu, dans une branche longitudinale, le circuit série d'un interrupteur (S, T1) commandé, d'un détecteur de courant (F, R₁) et d'une inductance (L), dans une branche transversale, entre l'interrupteur et l'inductance, une diode de roue libre (D_{F}) et du côté de la sortie, un condensateur (C_{g}) de lissage et l'interrupteur est commandé pour l'ouverture et la fermeture périodiques par un transistor (T2) de commande d'un circuit (AST) de commande, en fonction du courant (I_{L}) longitudinal, **caractérisé en ce que** l'interrupteur commandé est constitué sous la forme d'un transistor (T1) de commutation autoconducteur, auquel est envoyé, à partir de l'instant où est atteinte une valeur maximum du courant (I) longitudinal détectée par le détecteur (F, R₁) de courant, une tension de blocage produite dans la branche longitudinale par une diode (D1) Zener ayant un condensateur (C1) monté en parallèle à celle-ci.

2. Dévolteur suivant la revendication 1, **caractérisé en ce que** le transistor (T1) de commutation est un transistor FET à déplétion, la grille et la source étant reliées entre elles par une résistance (R3) de grille-source.

3. Dévolteur suivant la revendication 2, **caractérisé en ce que** le détecteur de courant est constitué dans la branche longitudinale, sous la forme d'une résistance (R1) de détection, la chute de tension s'y produisant, pouvant être envoyée à la section de base-émetteur du transistor (T2) de commande, lequel est relié par son collecteur à la grille du transistor (T1) de commutation.

4. Dévolteur suivant la revendication 3, **caractérisé en ce que** la résistance (R1) de détection se trouve, dans la branche longitudinale, entre la diode (D1) Zener et l'inductance (L).

5. Dévolteur suivant l'une des revendications 2 à 4, **caractérisé en ce qu'**il est prévu un transistor (T3) de décharge, dont la section collecteur-émetteur en série avec une résistance (R5) de décharge shunte la section grille-source du transistor (T1) de commutation, la chute de tension, sur une autre résistance (R6) de détection dans la branche longitudinale, pouvant être appliquée à la section base-émetteur du transistor de décharge.

6. Dévolteur suivant l'une des revendications 1 à 5, **caractérisé en ce que** la tension de sortie sur le condensateur (C_{g}) de lissage est limitée par une diode (T3) Zener.
